# EUROPEAN PATENT APPLICATION

(11) **EP 4 625 098 A1**
(43) Date of publication of application: **01.10.2025**
(21) Application number: 24197736.2
(22) Date of filing: 30.08.2024
(51) Int. Cl.: G06F 1/16, G06F 3/0487

(54) **METHOD FOR TRIGGERING FUNCTION, ELECTRONIC DEVICE AND PROGRAM PRODUCT**

(30) Priority: 28.03.2024 CN 202410370152
(71) Applicant: Beijing Xiaomi Mobile Software Co., Ltd., Beijing 100085 (CN)
(72) Inventor: WANG, Xin, Beijing, 100085 (CN)
(74) Representative: Dehns Germany Partnerschaft mbB

(57) **Abstract**

The present disclosure relates to a method for triggering function, an electronic device and a program production. The method for triggering function includes: receiving (S101) a preset triggering event, the preset triggering event comprising a preset click operation from a preset fingerprint assembly; obtaining (S102, S203, S304) an attitude parameter of an electronic device, the attitude parameter characterizing an attitude of the electronic device relative to a horizontal plane; determining (S103, S204, S305) an attitude type based on the attitude parameter; and triggering (S104, S205) a preset function based on the attitude type and the preset triggering event. In the present disclosure, the use of the fingerprint assembly is expanded, the user's need for triggering a wide range of preset functions is satisfied, the user's convenience in the operation of the electronic device is increased, and the use experience of the user is enhanced.

## Description

### TECHNICAL FIELD

The present disclosure relates to the field of electronic device and, in particular, to a method and device for triggering a function.

### BACKGROUND

With the development of science and technology and the increase of market demand, the fingerprint recognition technology has become a standard configuration of current intelligent electronic devices. The fingerprint recognition technology mainly includes optical fingerprint recognition, capacitive fingerprint recognition and ultrasonic fingerprint recognition, the main principle of which is to use sensors to take an image of fingerprints and compare the same with a template. At present, the fingerprint identification technology is applied for entering, unlocking and payment, with fewer applications in other scenarios.

### SUMMARY

Accordingly, the present disclosure provides a method for triggering function, an electronic device and a program product.

According to a first aspect, the present disclosure provides a method for triggering a function, including:
receiving a preset triggering event, the preset triggering event including a preset click operation from a preset fingerprint assembly;
obtaining an attitude parameter of an electronic device, the attitude parameter characterizing an attitude of the electronic device relative to a horizontal plane;
determining an attitude type based on the attitude parameter; and
triggering a preset function based on the attitude type and the preset triggering event.

Optionally, the attitude parameter includes a coordinate value of the electronic device under a preset coordinate system, and
determining the attitude type according to the attitude parameter includes:
determining the attitude type based on the coordinate value of the electronic device under the preset coordinate system.

Optionally, determining the attitude type based on the coordinate value of the electronic device under the preset coordinate system includes:
determining the attitude type based on the coordinate value of the electronic device under the preset coordinate system and a preset mapping relationship, the preset mapping relationship including a mapping relationship between a coordinate range under the preset coordinate system and the attitude type.

Optionally, triggering the preset function based on the attitude type and the preset triggering event includes:
determining a function type based the preset triggering event;
determining an attitude key value based the attitude type;
determining the preset function under the function type based on the attitude key value and a preset mapping relationship, the preset mapping relationship characterizing a mapping relationship between the attitude key value and the preset function; and
triggering the preset function.

Optionally, receiving the preset triggering event includes:
receiving the preset click operation from the preset fingerprint assembly via a fingerprint driver module of a kernel layer of an operating system of the electronic device, and transmitting event information corresponding to the preset click operation to a fingerprint module of a hardware abstraction layer of the operating system of the electronic device.

Optionally, obtaining the attitude parameter of the electronic device includes:
in response to the fingerprint module of the hardware abstraction layer receiving the event information corresponding to the preset click operation, obtaining the attitude parameter of the electronic device via a sensor module of the hardware abstraction layer, wherein the attitude parameter is obtained from a sensor of the electronic device via a sensor driver module of the kernel layer.

Optionally, determining the attitude key value based on the attitude type includes:
determining, via the fingerprint module of the hardware abstraction layer, the attitude type based on the attitude parameter; and
determining, via the fingerprint module of the hardware abstraction layer, the attitude key value based on the attitude type.

Optionally, triggering the preset function includes:
determining, via an attitude module of an application layer of the operating system of the electronic device, the preset function based on the attitude key value and the preset mapping relationship; and
triggering the preset function via the attitude module of the application layer.

Optionally, obtaining the attitude key value includes:
sending, via the fingerprint module of the hardware abstraction layer, the attitude key value to the fingerprint driver module of the kernel layer; and
reporting, via the fingerprint driver module of the kernel layer, the attitude key value to the attitude module of the application layer.

Optionally, the method further includes:
activating a function for receiving the preset triggering event under a preset condition.

Optionally, activating the function for receiving the preset triggering event under the preset condition includes:
via a notification module of a framework layer of an operating system of the electronic device, activating the function for receiving the preset triggering event and notifying a fingerprint module of a hardware abstraction layer of the operating system under the preset condition.

Optionally, the attitude type includes at least one of:
the electronic device being parallel to ground and a screen of the electronic device facing downwards;
the electronic device being parallel to the ground and the screen of the electronic device facing upwards; or
the electronic device in a vertical state being perpendicular to the ground and the screen of the electronic device facing towards a user.

Optionally, the preset function includes at least one of:
displaying a payment code;
displaying a collection code; or
scanning a QR code.

According to a second aspect, the present disclosure provides an electronic device, including:
a processor; and
a memory storing instructions executable by the processor that, when being executed by the processor, cause the processor to perform the method according to the first aspect or any embodiment thereof.

According to a third aspect, the present disclosure provides a program product having stored therein instructions that, when executed by one or more processors of an electronic device, causes the electronic device to perform the method according to the first aspect or any embodiment thereof.

With the above method of the present disclosure, the following beneficial effects may be achieved. In the present disclosure, a preset function is triggered based on a combination of a preset triggering event and an attitude type, which does not need to additionally provide an additional auxiliary key, and can complete the triggering of the preset function on the basis of the existing hardware device, therefore the use of the fingerprint assembly is expanded, the user's need for triggering a wide range of preset functions is satisfied, the user's convenience in the operation of the electronic device is increased, and the use experience of the user is enhanced.

It should be understood that the above general description and the following detailed description are only exemplary and explanatory, and do not limit the present disclosure.

### BRIEF DESCRIPTION OF THE DRAWINGS

The accompanying drawings herein, which are incorporated into and form a part of the specification, illustrate embodiments consistent with the present disclosure and are used in conjunction with the specification to explain the principle of the present disclosure.
FIG. 1 is a flowchart of a method for triggering a function according to an embodiment.
FIG. 2 is a flowchart of a method for triggering a function according to an embodiment.
FIG. 3 is a flowchart of a method for triggering a function according to an embodiment.
FIG. 4 is a flowchart of a method for triggering a function according to an embodiment.
FIG. 5 is a block diagram of a device for triggering a function according to an embodiment.
FIG. 6 is a block diagram of an electronic device according to an embodiment.

### DETAILED DESCRIPTION

Embodiments will be described herein in detail, examples of which are represented in the accompanying drawings. When the following description relates to the accompanying drawings, the same reference numerals in different accompanying drawings indicate the same or similar elements unless otherwise indicated. The implementations described in the following embodiments do not represent all implementations consistent with the present disclosure. Rather, they are only examples of devices and methods consistent with some aspects of the present disclosure as detailed in the appended claims.

In the related art, some electronic devices provide a `tap-tap key' function, that is, a user can trigger a preset shortcut function by two consecutive taps on a fingerprint key, for example, opening a camera by double-click, unlocking a screen by double-click, and the like. Although this method makes use of the fingerprint key, it can only trigger a single shortcut function, and cannot trigger different shortcut functions according to an attitude of the electronic device, which cannot satisfy different needs of a user for shortcut functions in different scenarios with different attitudes of the electronic device.

Some electronic devices provide a shortcut command function, the shortcut command function has a Device Orientation variable, through the value of which, six attitudes of the electronic device can be obtained, and a user can set shortcut functions triggered by pressing an auxiliary key in six different attitudes. Since the electronic device does not provide a ready-made solution for triggering different shortcut functions through the attitude of the electronic device, the user needs to set a triggering manner in an application corresponding to the shortcut command function, which is difficult and is of poor user experience, and since the electronic device does not have a fingerprint key, it is not possible to trigger the shortcut function through a fingerprint assembly, and thus it needs to additionally provide an additional auxiliary key to complete the shortcut command function.

Embodiments of the present disclosure provide a method for triggering a function applied to an electronic device, in which a preset triggering event is received via a fingerprint assembly, an attitude parameter of the electronic device is obtained by using a sensor, an attitude type is determined based on the attitude parameter, and a preset function is triggered based on the combination of the preset triggering event and the attitude type. The present disclosure does not need to additionally provide an additional auxiliary key, and can complete the triggering of the preset function on the basis of the existing hardware device, therefore the use of the fingerprint assembly is expanded, the user's need for triggering a wide range of preset functions is satisfied, the user's convenience in the operation of the electronic device is increased, and the use experience of the user is enhanced.

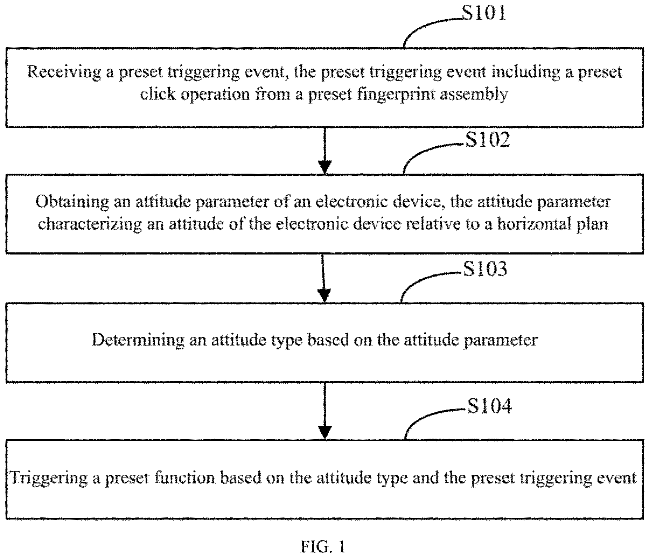

An embodiment of the present disclosure provides a method for triggering a function, which is applied to an electronic device for example an intelligent electronic device such as a smartphone, a smartwatch, a tablet or the like. As shown in FIG. 1, the method for triggering the function includes:
S101, receiving a preset triggering event, the preset triggering event including a preset click operation from a preset fingerprint assembly;
S 102, obtaining an attitude parameter of an electronic device, the attitude parameter characterizing an attitude of the electronic device relative to a horizontal plane;
S103, determining an attitude type based on the attitude parameter; and
S104, triggering a preset function based on the attitude type and the preset triggering event.

The embodiment provides a method for triggering and invoking a preset function according to a combination of a preset triggering event and an attitude of an electronic device, in order to make full use of a hardware already available in the electronic device. That is, in the embodiment, the triggering and invoking of the preset function are realized by means of the preset triggering event formed by the existing hardware of the electronic device in conjunction with the attitude of the electronic device.

In step S101, the preset triggering event may be generated by the existing hardware of the electronic device, for example, by triggering the fingerprint assembly provided in the electronic device.

The electronic device is provided with the fingerprint assembly, and the location of the fingerprint assembly is not limited, as the fingerprint assembly may be provided on the front side of the electronic device, on the back side of the electronic device, or on the side frame of the electronic device. When the user applies pressure to the fingerprint assembly to perform an operation such as a tap, a double-click, a triple-click, a long-press or the like, the fingerprint assembly will report a signal generated based on the operation, so that the electronic device receives a preset triggering event. The preset triggering event includes a preset click operation from the preset fingerprint assembly, for example, the preset triggering event may include a single-click event, a double-click event, a triple-click event, or the like. The user may, according to a personal usage habit, set one type of the above events as the preset triggering event, for example, setting only the double-click event as the preset triggering event; or set multiple types of the above events as the preset triggering events, for example, setting the double-click event and the triple-click event as the preset triggering events.

In step S 102, the attitude of the electronic device will change according to the adjustment of the user, and each attitude has a corresponding attitude parameter. The attitude parameter characterizes the attitude of the electronic device relative to a horizontal plane. The electronic device monitors the attitude of the electronic device using a built-in sensor, such as an acceleration sensor, a gyroscope, a gravity sensor, or the like, to obtain the attitude parameter of the electronic device, and the attitude parameter may reflect a specific attitude of the electronic device relative to the horizontal plane, for example, it can be determined based on the attitude parameter that the electronic device is perpendicular to the horizontal plane, or that the electronic device is parallel to the horizontal plane, or that the electronic device is tilted with respect to the horizontal plane, or the like. The attitude parameter may be presented in the form of a coordinate value, or may be presented as an angle value relative to the horizontal plane.

In step S103, the attitude parameter of the electronic device may change frequently due to different holding habits of the user when using the electronic device and the inability to keep the electronic device in the same attitude for a long period without change. In some cases, although the attitude parameter changes, the specific attitude of the electronic device does not change, there may only be a small deviation in a certain direction, and the user cannot guarantee that each time the user can accurately reach the attitude parameter corresponding to the preset function to be triggered. Therefore, there are provided a plurality of attitude types, and a fingerprint module of a hardware abstraction layer, after receiving the attitude parameter sent by a sensor module, calculates the attitude parameter and determines the attitude type corresponding to the attitude parameter.

In step S 104, different combinations of the preset triggering events and the attitude types of the electronic device correspond to different preset functions, which may be set by the user according to his or her personal usage habit, for example, the preset functions corresponding to the combinations of the same type of preset triggering event and different attitude types of the electronic device may be set. If the user wishes to trigger different functions under the same attitude type of the electronic device, the user may set the preset functions corresponding to combinations of a plurality of types of preset triggering events and the same attitude type of the electronic device. For example, when the preset triggering event is a double-click event, it sets triggering a function of scanning a code when the attitude type is that the electronic device in a vertical state is perpendicular to the horizontal plane, and triggering a function of taking a photo when the attitude type is that the electronic device in a horizontal state is perpendicular to the horizontal plane. As another example, when the attitude type is that the electronic device is tilted with respect to the horizontal plane, it sets triggering a torch function when the preset triggering event is a double-click event set; and triggering a recording function when the preset triggering event is a triple-click event. After the preset triggering event is received and the attitude type of the electronic device is determined, the preset function corresponding to the preset triggering event and the attitude type may be triggered as set, so that the user may use the preset function in one step without a plurality of operations.

In an example, the sensor such as an acceleration sensor, gyroscope is not in a normally open state. The electronic device receives the preset triggering event, then activates the sensor to detect the attitude of the electronic device by using the sensor and obtain the attitude parameter of the electronic device, and the electronic device determines the attitude type based on the attitude parameter and triggers the preset function. For example, if the user sets triggering the torch function through a double-click event in conjunction with tilting the electronic device, when the user has two clicks on the fingerprint assembly, the electronic device receives the preset triggering event, and then detects the attitude of the electronic device by using the sensor to obtain the attitude parameter, and actives the torch function if the attitude parameter indicates that the electronic device is in a tilted state.

In another example, the sensor of the electronic device is in a normally open state, i.e., the attitude of the electronic device can be monitored in real time and the attitude parameter of the electronic device can be fed back to determine the attitude type. After the electronic device receives the preset triggering event, the electronic device directly triggers the preset function. For example, the user sets triggering the torch function through a double-click event in conjunction with tilting the electronic device, the user always tilts the electronic device for using the same, the electronic device uses the sensor to obtain the attitude parameter of the electronic device in a tilted state so as to determine the attitude type, and if the electronic device receives a double-click operation on the fingerprint assembly from the user, it activates the torch function.

In the embodiment, a preset function is triggered based on a combination of a preset triggering event and an attitude type, which does not need to additionally provide an additional auxiliary key, and can complete the triggering of the preset function on the basis of the existing hardware device, therefore the use scenario of the fingerprint assembly is expanded, the user's need for triggering a wide range of preset functions is satisfied, the user's convenience in the operation of the electronic device is increased, and the use experience of the user is enhanced.

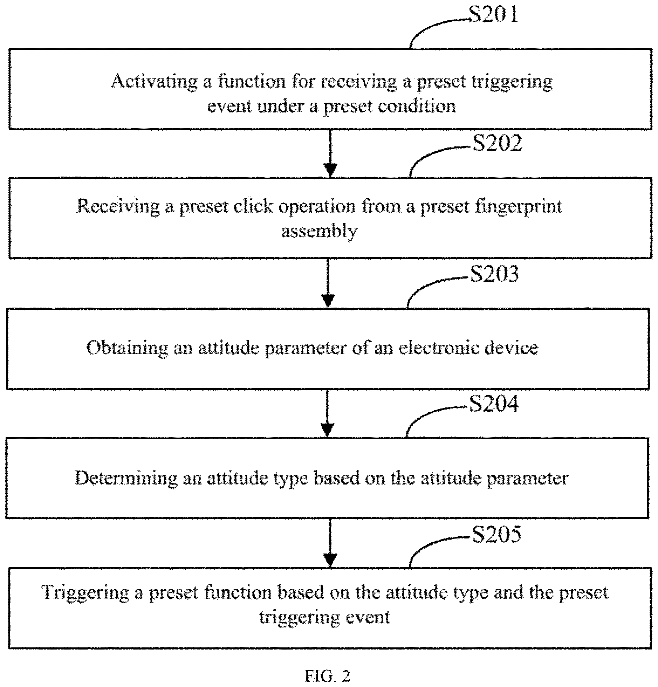

In an embodiment, as shown in FIG. 2, a method for triggering a function includes:
S201, activating a function for receiving a preset triggering event under a preset condition;
S202, receiving a preset click operation from a preset fingerprint assembly;
S203, obtaining an attitude parameter of an electronic device;
S204, determining an attitude type based on the attitude parameter; and
S205, triggering a preset function based on the attitude type and the preset triggering event.
Steps S203, S204, and S205 are implemented in the same manner as steps S102, S103, and S 104 in the above embodiment, and will not be repeated herein.

In step S201, the fingerprint assembly may scan fingerprint information of a user, and perform identity recognition by comparing the scanned fingerprint information with pre-stored fingerprint information, so the fingerprint assembly may be used in scenarios such as unlocking of the electronic device, payment, and the like. When the electronic device is in a screen-locked state, the user may use the fingerprint assembly to unlock the electronic device. Since the unlocking event and the preset triggering event are both operations on the fingerprint assembly, the unlocking event and the preset triggering event are two events, and the operating system of the electronic device may not simultaneously monitor and process the two events, and thus the operating system may activate the function for receiving the preset triggering event after completing the unlocking event in order to monitor the preset triggering event.

In some embodiments, the preset condition includes a display screen of the electronic device jumping to an unlocked state.

When the display screen of the electronic device jumps to the unlocked state, i.e., the unlocking event has been completed and the user may use the electronic device to perform operations on an application, etc., the operating system activates the function for receiving the preset triggering event to monitor the preset triggering event. Triggering the preset function after unlocking may effectively improve the safety for using the electronic device.

In step S202, the preset fingerprint assembly refers to a capacitive fingerprint assembly, and the capacitive fingerprint assembly may be arranged on the side frame of the electronic device, the backside of the electronic device, or the like. The capacitive fingerprint assembly may continuously monitor a click operation within a short period of time, and report the event corresponding to the click operation. The preset click operation may be an operation such as a single click, a double-click, a triple-click, a long press, or the like. When the user's finger performs a click operation on the preset fingerprint assembly, there is capacitive coupling between the human skin and an electrode, thereby generating a capacitive change, which is captured and converted into an electrical signal for transmission.

In some embodiments, receiving the preset click operation from the preset fingerprint assembly includes:
receiving at least two click operations on the preset fingerprint assembly within a preset time period.

In order to avoid a false touch and for convenience, the preset triggering event may be set as a double-click event. The double-click event refers to receiving two clicks on the preset fingerprint assembly within a preset time period, and the preset time period is usually set to be a short time, such as Is, 1.5s, or the like. If the user clicks on the preset fingerprint assembly twice within 1s, the operating system may receive the double-click event. In addition, the preset triggering event may also be set as a triple-click event, i.e., three clicks on the preset fingerprint assembly are received within the preset time period.

In the embodiment, the triggering of the preset function can be implemented when the electronic device is in an unlocked state, which facilitates the operation of the electronic device by the user, and at the same time, improves the use safety of the electronic device.

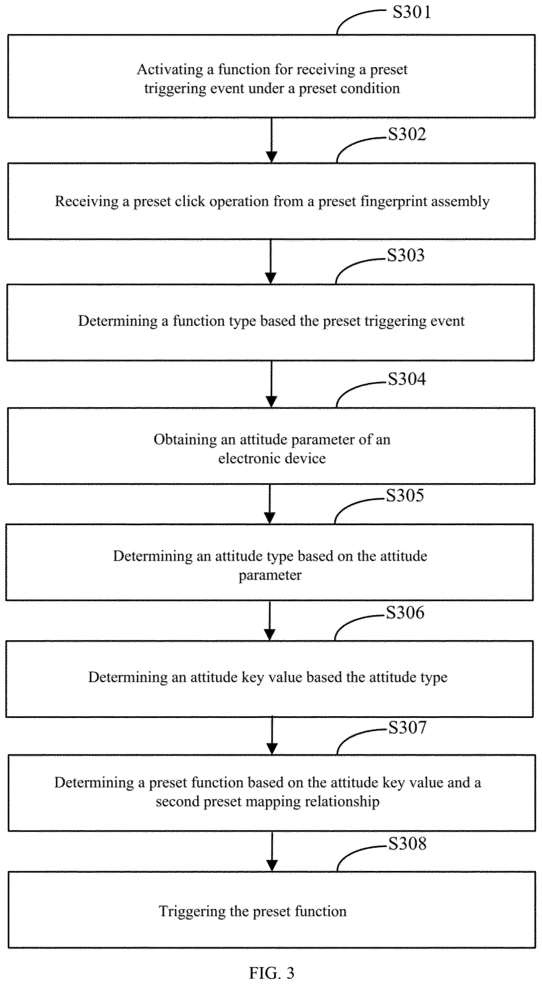

In an embodiment, as shown in FIG. 3, a method for triggering a function includes:
S301, activating a function for receiving a preset triggering event under a preset condition;
S302, receiving a preset click operation from a preset fingerprint assembly;
S303, determining a function type based the preset triggering event;
S304, obtaining an attitude parameter of an electronic device;
S305, determining an attitude type based on the attitude parameter;
S306, determining an attitude key value based the attitude type;
S307, determining a preset function under the function type based on the attitude key value and a second preset mapping relationship;
S308, triggering the preset function.

The steps S301, S302, and S304 are implemented in the same manner as steps S201-S203 in the above embodiment, and will not be repeated herein.

The operating system of the electronic device includes an inner application layer, a framework layer, a hardware abstraction layer, a kernel layer, and a hardware layer, the framework layer includes a notification module, the hardware abstraction layer includes a fingerprint module and a sensor module, and the kernel layer includes a fingerprint driver module and a sensor driver module. In an embodiment of the present disclosure, the inner application layer, framework layer, hardware abstraction layer, kernel layer, hardware layer, notification module, fingerprint module, sensor module, fingerprint driver module and sensor driver module may be implemented by one or more of application specific integrated circuit (ASIC), digital signal processor (DSP), digital signal processing device (DSPD), programmable logic device (PLD), field programmable gate array (FPGA), controller, microcontroller, processor, microprocessor, or other electronic components in the electronic device.

In some embodiments, the step S301 of activating the function for receiving the preset triggering event under the preset condition includes:
via the notification module of the framework layer of the operating system of the electronic device, activating the function for receiving the preset triggering event and notifying the fingerprint module of the hardware abstraction layer of the operating system under the preset condition.

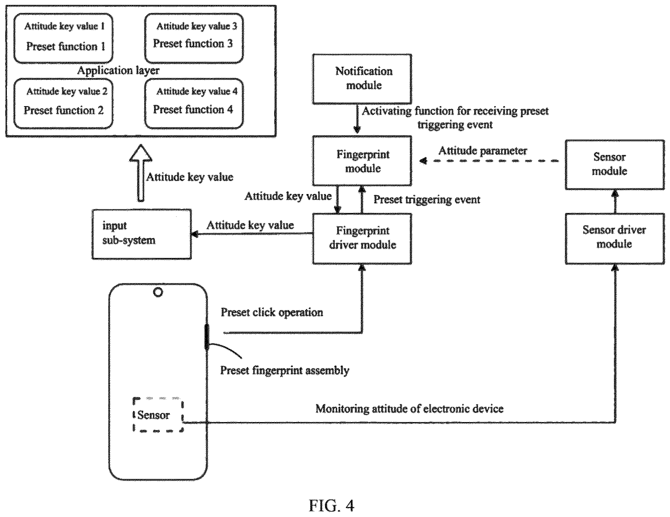

When the electronic device completes the screen unlocking so that the screen thereof jumps to the unlocked state, i.e., completes the unlocking event, the electronic device may monitor the preset triggering event. As shown in FIG. 4, the notification module of the framework layer activates the function for receiving the preset triggering event and notifies the fingerprint module of the hardware abstraction layer so that the fingerprint module of the hardware abstraction layer may receive the preset triggering event.

In some embodiments, the step S302 of receiving the preset click operation from the preset fingerprint assembly includes:
receiving a preset click operation from the preset fingerprint assembly via the fingerprint driver module of the kernel layer of the operating system of the electronic device, and transmitting event information corresponding to the preset click operation to the fingerprint module of the hardware abstraction layer of the operating system of the electronic device.

Since the function for receiving the preset triggering event is activated, when the user performs the preset click operation on the preset fingerprint assembly, the preset fingerprint assembly sends the event information corresponding to the preset click operation to the fingerprint driver module of the kernel layer, the fingerprint driver module of the kernel layer transmits the event information corresponding to the preset click operation (i.e., the preset triggering event) to the fingerprint module of the hardware abstraction layer, and the fingerprint module of the hardware abstraction layer may receive the preset triggering event.

In step S303, the preset click operation on the preset fingerprint assembly includes a plurality of types of operations such as single click, double-click, triple-click, long press, or the like, i.e., the preset triggering event includes a plurality of types, and in order to satisfy the user's need for triggering a variety of preset functions when the electronic device maintains the same attitude, different function types are set for the types of the preset triggering events, i.e., one type of the preset triggering event corresponds to one function type, and one function type includes a variety of preset functions. For example, the preset triggering event includes a double-click event and a triple-click event, the double-click event corresponds to a payment-type function, and the triple-click event corresponds to a routine-type function.

The payment-type function includes preset functions such as displaying a collection code and displaying a payment code, and the routine-type function includes preset functions such as turning on a torch and scanning a QR code. Therefore, the fingerprint module of the hardware abstraction layer, after receiving the preset triggering event, may determine the function type based on the preset triggering event, for determining the preset function in the subsequent step S307.

In some embodiments, the step S304 of obtaining the attitude parameter of the electronic device includes:
after the fingerprint module of the hardware abstraction layer receives the event information corresponding to the preset click operation, obtaining the attitude parameter of the electronic device via the sensor module of the hardware abstraction layer, wherein the attitude parameter is obtained from a sensor of the electronic device via the sensor driver module of the kernel layer.

As shown in FIG. 4, after the fingerprint module of the hardware abstraction layer receives the event information corresponding to the preset click operation, it monitors the attitude of the electronic device using a built-in sensor of the electronic device, and transmits, via the sensor driver module of the kernel layer, the attitude parameter obtained by the sensor to the sensor module of the hardware abstraction layer, which in turn sends, e.g., via an Android Interface Definition Language (AIDL) interface, the attitude parameter to the fingerprint module of the hardware abstraction layer.

In some embodiments, the attitude type includes at least one of: the electronic device being parallel to ground and a screen of the electronic device facing downwards, the electronic device being parallel to the ground and the screen of the electronic device facing upwards, or the electronic device in a vertical state being perpendicular to the ground and the screen of the electronic device facing towards a user. In addition, the attitude type also includes the electronic device having an angle with respect to the ground and the backside of the screen of the electronic device facing the ground, the electronic device in a horizontal state being perpendicular to the ground and the screen of the electronic device facing the user, and the like.

The user may set a variety of attitude types according to his or her personal usage habits, so that the fingerprint module of the hardware abstraction layer may determine the attitude type of the electronic device according to the attitude parameter sent by the sensor module.

In some embodiments, the step S305 of determining the attitude type based on the attitude parameter includes:
determining the attitude type based on a coordinate value of the electronic device under a preset coordinate system.

The attitude parameter obtained by the fingerprint module of the hardware abstraction layer may be a coordinate value of the electronic device under a preset coordinate system, and the preset coordinate system may be an xyz coordinate system established by the sensor perpendicular to the horizontal plane when the electronic device is in a vertical state, so that the sensor detects a simultaneous change of the coordinate value of the electronic device when the attitude of the electronic device changes. The fingerprint module of the hardware abstraction layer calculates the coordinate value to determine the attitude type corresponding to the attitude parameter of the electronic device in different attitudes.

In some embodiments, determining the attitude type based on the coordinate value of the electronic device under the preset coordinate system includes:
determining the attitude type based on the coordinate value of the electronic device under the preset coordinate system and a first preset mapping relationship, the first preset mapping relationship including a mapping relationship between a coordinate range under the preset coordinate system and the attitude type.

The coordinate value of the electronic device under the preset coordinate system corresponds to an attitude type, and after the coordinate value is obtained, the attitude type may be determined according to the first mapping relationship. The first mapping relationship may be a factory default setting of the electronic device, and the user may also change the first mapping relationship according to a personal usage habit. For example, the attitude type of the electronic device includes two types: the electronic device is parallel to the ground and the screen of the electronic device is facing down, and the electronic device is parallel to the ground and the screen of the electronic device is facing up, the attitude parameter with the coordinate value of z in the range of (0, B) is determined to be the attitude type in which the electronic device is parallel to the ground and the screen of the electronic device is facing up, and the attitude parameter with the coordinate value of z in the range of (-A, 0) is determined to be the attitude type in which the electronic device is parallel to the ground and the screen of the electronic device is facing down.

In step S306, each attitude type has a corresponding attitude key value, and the fingerprint module of the hardware abstraction layer may determine the attitude key value according to the attitude type. For example, there sets three attitude types which respectively are attitude type A, attitude type B, and attitude type C, the attitude type A corresponds to an attitude key value 1, the attitude type B corresponds to an attitude key value 2, and the attitude type C corresponds to an attitude key value 3. If it is determined that the fingerprint module of the hardware abstraction layer determines the attitude type A based on the attitude parameter, the attitude key value 1 may be determined.

In some embodiments, the method of obtaining the attitude key value includes:
sending, via the fingerprint module of the hardware abstraction layer, the attitude key value to the fingerprint driver module of the kernel layer; and
reporting, via the fingerprint driver module of the kernel layer, the attitude key value to the attitude module of the application layer.

The fingerprint module of the hardware abstraction layer, after obtaining the attitude key value by calculation, may use an icotl interface function to send the attitude key value to the fingerprint driver module of the kernel layer, and then the fingerprint driver module of the kernel layer reports the attitude key value to the attitude module of the application layer. In an example, as shown in FIG. 4, the fingerprint driver module of the kernel layer may send the attitude key value to the input subsystem using input_report_key via the icotl interface function, and the input subsystem in turn reports the attitude key value to the attitude module of the application layer. In addition, the fingerprint module of the hardware abstraction layer, after obtaining the attitude key value by calculation, may also transmit the attitude key value to the framework layer, which reports the attitude key value to the attitude module of the application layer.

In step S307, the second preset mapping relationship characterizes the mapping relationship between the attitude key value and the preset function, and after the attitude key value is obtained, the preset function corresponding to the attitude key value under the function type may be determined based on the second preset mapping relationship. The preset function is then triggered in step S308, so that the electronic device jumps to the interface corresponding to the preset function, and the user can use the corresponding preset function. The second preset mapping relationship may be a default factory setting of the electronic device, and the user may also adjust the mapping relationship between the attitude key value and the preset function according to his or her personal usage habits. For example, in the second preset mapping relationship with default setting, the preset function corresponding to the attitude key value 1 is to turn on the torch in the routine-type function, the preset function corresponding to the attitude key value 2 is to take a screenshot in the routine-type function, and the preset function corresponding to the attitude key value 3 is to display the payment code in the payment-type function. Because the function the user most often uses is to display the payment code, the user may change the preset function corresponding to the attitude key value 1 to set the preset function corresponding to the attitude key value 1 as displaying the payment code, and to set the preset function corresponding to the attitude key value 3 as turning on the torch.

In some embodiments, the preset function is determined via the attitude module of the application layer of the operating system of the electronic device based on the attitude key value and the second preset mapping relationship;

The preset function is triggered via the attitude module of the application layer.

As shown in FIG. 4, the preset mapping relationship includes a plurality of sets of attitude key value and preset function, and the attitude module of the application layer, after obtaining the attitude key value, may index the attitude key value in the preset mapping relationship according to the attitude key value to find the preset function corresponding to the attitude key value, and the preset function may be triggered at the attitude module of the application layer.

In some embodiments, the preset function includes any of: displaying a payment code, displaying a collection code, and scanning a QR code. For example, after a double-click event on the preset fingerprint assembly is received, if the attitude type reflects that the electronic device is parallel to the ground and the screen of the electronic device is facing downwards, the payment code is displayed; if the attitude type reflects that the electronic device is parallel to the ground and the screen of the electronic device is facing upwards, the collection code is displayed; and if the attitude type reflects that the electronic device in a vertical state is perpendicular to the ground and the screen of the electronic device is facing toward the user, the QR code may be scanned. In addition, the preset function further includes taking a screenshot, turning on a torch, opening a camera, turning on the recording, and so on. The user may set the attitude types corresponding to different preset functions according to the individual use needs.

In the embodiment, a preset function is triggered based on a combination of a preset triggering event and an attitude type, which does not need to additionally provide an additional auxiliary key, and can complete the triggering of the preset function on the basis of the existing hardware device, therefore the use of the fingerprint assembly is expanded, the user's need for triggering a wide range of preset functions is satisfied, the user's convenience in the operation of the electronic device is increased, and the use experience of the user is enhanced.

In the embodiment, the operating system of the electronic device combines the preset triggering event and the attitude parameter to achieve the reporting of the attitude key value, and to achieve the triggering of the preset function, without increasing the cost of hardware. Further, the user may set the preset functions under different scenarios on their own, to meet the needs of the user, which has a high degree of playfulness, thereby avoiding the problem of a single preset function, and improving the user's use experience.

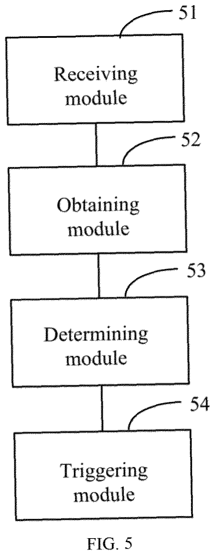

An embodiment of the present disclosure provides a device for triggering a function, applied to an electronic device. As shown in FIG. 5, a block diagram of a device for triggering a function is shown.

The block diagram includes: a receiving module 51, an obtaining module 52, a determining module 53, and a triggering module 54. The receiving module 51 is configured to receive a preset triggering event, the preset triggering event including a preset click operation from a preset fingerprint assembly; the obtaining module 52 is configured to obtain an attitude parameter of an electronic device, the attitude parameter characterizing an attitude of the electronic device relative to a horizontal plane; the determining module 53 is configured to determine an attitude type based on the attitude parameter; and the triggering module 54 is configured to trigger a preset function based on the attitude type and the preset triggering event.

In an embodiment, the attitude parameter includes a coordinate value of the electronic device under a preset coordinate system, and the determining module 53 is further configured to determine the attitude type based on the coordinate value of the electronic device under the preset coordinate system.

In an embodiment, the determining module 53 is further configured to: determine the attitude type based on the coordinate value of the electronic device under the preset coordinate system and a first preset mapping relationship, the first preset mapping relationship including a mapping relationship between a coordinate range under the preset coordinate system and the attitude type.

In an embodiment, the triggering module 54 is further configured to: determine a function type based the preset triggering event; determining an attitude type based on the attitude parameter; determine an attitude key value based the attitude type; determine the preset function under the function type based on the attitude key value and a second preset mapping relationship, the second preset mapping relationship characterizing a mapping relationship between the attitude key value and the preset function; and trigger the preset function.

In an embodiment, the receiving module 51 is further configured to: receive a preset click operation from the preset fingerprint assembly via a fingerprint driver module of a kernel layer of an operating system of the electronic device, and transmit event information corresponding to the preset click operation to a fingerprint module of a hardware abstraction layer of the operating system of the electronic device.

In an embodiment, the obtaining module 52 is further configured to: after the fingerprint module of the hardware abstraction layer receives the event information corresponding to the preset click operation, obtain the attitude parameter of the electronic device via a sensor module of the hardware abstraction layer, wherein the attitude parameter is obtained from a sensor of the electronic device via a sensor driver module of the kernel layer.

In an embodiment, the triggering module 53 is further configured to: determine, via the fingerprint module of the hardware abstraction layer, the attitude type based on the attitude parameter; and determine, via the fingerprint module of the hardware abstraction layer, the attitude key value based on the attitude type.

In an embodiment, the triggering module 53 is further configured to: determine, via an attitude module of an application layer of the operating system of the electronic device, the preset function based on the attitude key value and the second preset mapping relationship; and trigger the preset function via the attitude module of the application layer.

In an embodiment, the triggering module 53 is further configured to: send, via the fingerprint module of the hardware abstraction layer, the attitude key value to the fingerprint driver module of the kernel layer; and report, via the fingerprint driver module of the kernel layer, the attitude key value to the attitude module of the application layer.

In an embodiment, the receiving module 51 is further configured to: activate a function for receiving the preset triggering event under a preset condition.

In an embodiment, the receiving module 51 is further configured to: via a notification module of a framework layer of an operating system of the electronic device, activate the function for receiving the preset triggering event and notify a fingerprint module of a hardware abstraction layer of the operating system under the preset condition.

In an embodiment, the attitude type includes at least one of: the electronic device being parallel to ground and a screen of the electronic device facing downwards, the electronic device being parallel to the ground and the screen of the electronic device facing upwards, or the electronic device in a vertical state being perpendicular to the ground and the screen of the electronic device facing towards a user.

In an embodiment, the preset function includes any one of: displaying a payment code, displaying a collection code, and scanning a QR code.

With respect to the device for triggering the function in the above embodiments, the specific manner in which each module performs an operation has been described in detail in the embodiments relating to the method, and will not be described in detail herein.

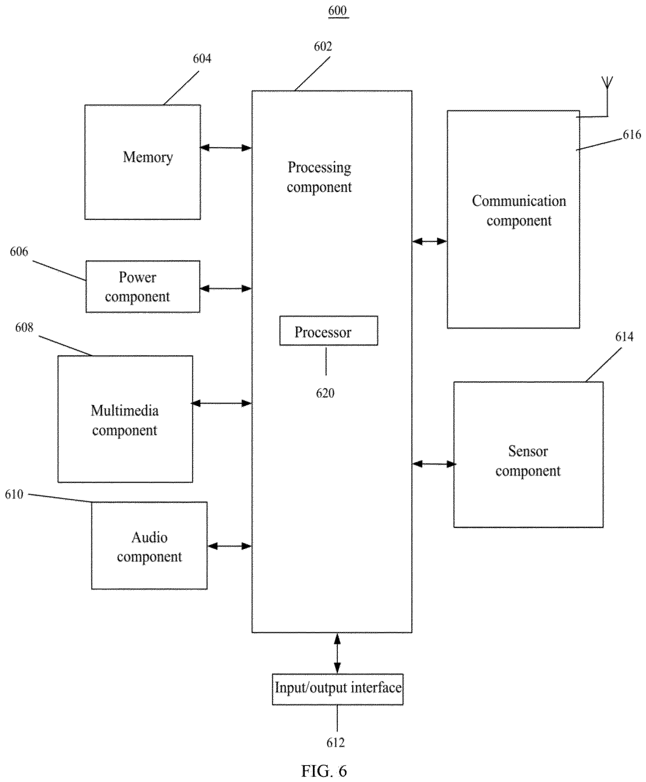

FIG. 6 is a block diagram of an electronic device 600 according to an embodiment. For example, the electronic device 600 may be a mobile phone, a computer, a digital broadcasting terminal, a messaging device, a game console, a tablet device, a medical device, a fitness device, a personal digital assistant, or the like.

Referring to FIG. 6, the electronic device 600 may include one or more of a processing component 602, a memory 604, a power component 606, a multimedia component 608, an audio component 610, an input/output (I/O) interface 612, a sensor component 614, and a communication component 616.

The processing component 602 generally controls the overall operations of the electronic device 600, such as operations associated with display, telephone calls, data communications, camera operations, and recording operations. The processing component 602 may include one or more processors 620 to execute instructions to complete all or part of the steps of the foregoing method. In addition, the processing component 602 may include one or more modules to facilitate interaction between the processing component 602 and other components. For example, the processing component 602 may include a multimedia module to facilitate the interaction between the multimedia component 608 and the processing component 602.

The memory 604 is configured to store various types of data to support the operation at the electronic device 600. Examples of these data include instructions for any application or method operating on the electronic device 600, contact data, phone book data, messages, pictures, videos and the like. The memory 604 may be implemented by any type of volatile or non-volatile storage device or a combination thereof, such as static random access memory (SRAM), electrically erasable programmable read-only memory (EEPROM), erasable and programmable read-only memory (EPROM), programmable read-only memory (PROM), read-only memory (ROM), magnetic memory, flash memory, magnetic disk or optical disk.

The power component 606 provides power to various components of the electronic device 600. The power component 606 may include a power management system, one or more power supplies, and other components associated with generating, managing, and distributing power for the electronic device 600.

The multimedia component 608 includes a screen that provides an output interface between the electronic device 600 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of the touch or slide action, but also detect the duration and pressure related to the touch or slide operation. In some embodiments, the multimedia component 608 includes a front camera and/or a rear camera. When the electronic device 600 is in an operation mode, such as a shooting mode or a video mode, the front camera and/or the rear camera can receive external multimedia data. Each of the front camera and rear camera may be a fixed optical lens system or have focal length and optical zoom capabilities.

The audio component 610 is configured to output and/or input audio signals. For example, the audio component 610 includes a microphone (MIC), and when the electronic device 600 is in an operation mode, such as a call mode, a recording mode, and a voice recognition mode, the microphone is configured to receive an external audio signal. The received audio signal can be further stored in the memory 604 or sent via the communication component 616. In some embodiments, the audio component 610 further includes a speaker for outputting audio signals.

The I/O interface 612 provides an interface between the processing component 602 and a peripheral interface module. The above-mentioned peripheral interface module may be a keyboard, a click wheel, a button, and the like. These buttons may include but are not limited to home button, volume button, start button, and lock button.

The sensor component 614 includes one or more sensors for providing the electronic device 600 with various aspects of state evaluation. For example, the sensor component 614 can detect the on/off status of the electronic device 600 and the relative positioning of components. For example, the component is a display and keypad of the electronic device 600. The sensor component 614 can also detect the position change of the electronic device 600 or a component of the electronic device 600, the presence or absence of contact between the user and the electronic device 600, the orientation or acceleration/deceleration of the electronic device 600, and the temperature change of the electronic device 600. The sensor component 614 may include a proximity sensor configured to detect the presence of nearby objects when there is no physical contact. The sensor component 614 may also include a light sensor, such as a CMOS or CCD image sensor, for use in imaging applications. In some embodiments, the sensor component 614 may also include an acceleration sensor, a gyroscope sensor, a magnetic sensor, a pressure sensor, or a temperature sensor.

The communication component 616 is configured to facilitate wired or wireless communication between the electronic device 600 and other devices. The electronic device 600 can access a wireless network based on a communication standard, such as WiFi, 2G, 3G, 4G or 5G, or a combination thereof. In an embodiment, the communication component 616 receives a broadcast signal or broadcast related information from an external broadcast management system via a broadcast channel. In an embodiment, the communication component 616 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, the electronic device 600 may be implemented by one or more of application specific integrated circuit (ASIC), digital signal processor (DSP), digital signal processing device (DSPD), programmable logic devices (PLD), field programmable gate array (FPGA), controller, microcontroller, microprocessor, or other electronic components, to perform the above-mentioned methods.

An embodiment also provides a non-transitory computer-readable storage medium including instructions, such as the memory 604 including instructions, and the instructions may be executed by the processor 620 of the electronic device 600 to complete the foregoing method. For example, the non-transitory computer-readable storage medium may be ROM, random access memory (RAM), CD-ROM, magnetic tape, floppy disk, optical data storage device and the like.

A non-transitory computer-readable storage medium has instructions stored thereon that, when being executed by a processor of the electronic device, cause the processor of the electronic device to implement the method for triggering the function according to the embodiment of the present disclosure.

A computer program product includes computer instructions, the computer instructions are stored in a computer-readable storage medium, a processor of an electronic device reads the computer instructions from the computer-readable storage medium, and the processor executes the computer instructions such that the electronic device performs the method for triggering the function according to the embodiment of the present disclosure.

A first aspect of embodiments of the present disclosure provides a method for triggering a function, including: receiving a preset triggering event, the preset triggering event including a preset click operation from a preset fingerprint assembly; obtaining an attitude parameter of an electronic device, the attitude parameter characterizing an attitude of the electronic device relative to a horizontal plane; determining an attitude type based on the attitude parameter; and triggering a preset function based on the attitude type and the preset triggering event.

In some embodiments, the attitude parameter includes a coordinate value of the electronic device under a preset coordinate system, and determining the attitude type according to the attitude parameter includes: determining the attitude type based on the coordinate value of the electronic device under the preset coordinate system.

In some embodiments, determining the attitude type based on the coordinate value of the electronic device under the preset coordinate system includes: determining the attitude type based on the coordinate value of the electronic device under the preset coordinate system and a first preset mapping relationship, the first preset mapping relationship including a mapping relationship between a coordinate range under the preset coordinate system and the attitude type.

In some embodiments, triggering the preset function based on the attitude type and the preset triggering event includes: determining a function type based the preset triggering event; determining an attitude key value based the attitude type; determining the preset function under the function type based on the attitude key value and a preset mapping relationship, the preset mapping relationship characterizing a mapping relationship between the attitude key value and the preset function; and triggering the preset function.

In some embodiments, receiving the preset triggering event includes: receiving a preset click operation from the preset fingerprint assembly via a fingerprint driver module of a kernel layer of an operating system of the electronic device, and transmitting event information corresponding to the preset click operation to a fingerprint module of a hardware abstraction layer of the operating system of the electronic device.

In some embodiments, obtaining the attitude parameter of the electronic device includes: in response to the fingerprint module of the hardware abstraction layer receiving the event information corresponding to the preset click operation, obtaining the attitude parameter of the electronic device via a sensor module of the hardware abstraction layer, wherein the attitude parameter is obtained from a sensor of the electronic device via a sensor driver module of the kernel layer.

In some embodiments, determining the attitude key value based on the attitude type includes: determining, via the fingerprint module of the hardware abstraction layer, the attitude type based on the attitude parameter; and determining, via the fingerprint module of the hardware abstraction layer, the attitude key value based on the attitude type.

In some embodiments, determining and triggering the preset function includes: determining, via an attitude module of an application layer of the operating system of the electronic device, the preset function based on the attitude key value and the second preset mapping relationship; and triggering the preset function via the attitude module of the application layer.

In some embodiments, obtaining the attitude key value includes: sending, via the fingerprint module of the hardware abstraction layer, the attitude key value to the fingerprint driver module of the kernel layer; and reporting, via the fingerprint driver module of the kernel layer, the attitude key value to the attitude module of the application layer.

In some embodiments, the method further includes: activating a function for receiving the preset triggering event under a preset condition.

In some embodiments, activating the function for receiving the preset triggering event under the preset condition includes: via a notification module of a framework layer of an operating system of the electronic device, activating the function for receiving the preset triggering event and notifying a fingerprint module of a hardware abstraction layer of the operating system under the preset condition.

In some embodiments, the attitude type includes at least one of: the electronic device being parallel to ground and a screen of the electronic device facing downwards, the electronic device being parallel to the ground and the screen of the electronic device facing upwards, or the electronic device in a vertical state being perpendicular to the ground and the screen of the electronic device facing towards a user.

In some embodiments, the preset function includes any one of: displaying a payment code, displaying a collection code, and scanning a QR code.

A second aspect of embodiments of the present disclosure provides a device for triggering a function, applied to an electronic device and including: a receiving module, configured to receive a preset triggering event, the preset triggering event including a preset click operation from the preset fingerprint assembly; an obtaining module, configured to obtain an attitude parameter of the electronic device, the attitude parameter characterizing an attitude of the electronic device relative to a horizontal plane; a determining module, configured to determine an attitude type based on the attitude parameter; and a triggering module, configured to trigger a preset function based on the attitude type and the preset triggering event.

A third aspect of embodiments of the present disclosure provides an electronic device, including: a processor; and a memory storing instructions executable by the processor, wherein the processor is configured to execute the executable instructions in the memory to implement the method for triggering the function according to the first aspect.

A fourth aspect of embodiments of the present disclosure provides a non-transitory computer-readable storage medium having executable instructions stored thereon that, when being executed by a processor, implement the method for triggering the function according to the first aspect.

A fifth aspect of embodiments of the present disclosure provides a computer program product including computer instructions, the computer instructions are stored in a computer-readable storage medium, a processor of an electronic device reads the computer instructions from the computer-readable storage medium, and the processor executes the computer instructions such that the electronic device performs the method for triggering the function according to the first aspect.

Those skilled in the art may easily conceive of other embodiments of the present disclosure upon consideration of the specification and practice of the invention disclosed herein. The present disclosure is intended to cover any variations, uses, or adaptations of the present disclosure that follow the general principles of the present disclosure and include the common general knowledge or conventional technical means in the technical field not disclosed by the present disclosure. The specification and embodiments are to be regarded as exemplary only, with the true scope of the present disclosure being indicated by the following claims.

## Claims

1. A method for triggering a function, comprising:
receiving (S101) a preset triggering event, the preset triggering event comprising a preset click operation from a preset fingerprint assembly;
obtaining (S102, S203, S304) an attitude parameter of an electronic device, the attitude parameter characterizing an attitude of the electronic device relative to a horizontal plane;
determining (S103, S204, S305) an attitude type based on the attitude parameter; and
triggering (S104, S205) a preset function based on the attitude type and the preset triggering event.

2. The method according to claim 1, wherein the attitude parameter comprises a coordinate value of the electronic device under a preset coordinate system, and
determining (S103, S204, S305) the attitude type according to the attitude parameter comprises:
determining the attitude type based on the coordinate value of the electronic device under the preset coordinate system.

3. The method according to claim 2, wherein determining the attitude type based on the coordinate value of the electronic device under the preset coordinate system comprises:
determining the attitude type based on the coordinate value of the electronic device under the preset coordinate system and a preset mapping relationship, the preset mapping relationship comprising a mapping relationship between a coordinate range under the preset coordinate system and the attitude type.

4. The method according to any one of the preceding claims , wherein triggering (S104, S205) the preset function based on the attitude type and the preset triggering event comprises:
determining (S303) a function type based the preset triggering event;
determining (S306) an attitude key value based the attitude type;
determining (S307) the preset function under the function type based on the attitude key value and a preset mapping relationship, the preset mapping relationship characterizing a mapping relationship between the attitude key value and the preset function; and
triggering (S308) the preset function.

5. The method according to any one of the preceding claims , wherein receiving (S 101) the preset triggering event comprises:
receiving the preset click operation from the preset fingerprint assembly via a fingerprint driver module of a kernel layer of an operating system of the electronic device, and transmitting event information corresponding to the preset click operation to a fingerprint module of a hardware abstraction layer of the operating system of the electronic device.

6. The method according to claim 5, wherein obtaining (S102, S203, S304) the attitude parameter of the electronic device comprises:
in response to the fingerprint module of the hardware abstraction layer receiving the event information corresponding to the preset click operation, obtaining the attitude parameter of the electronic device via a sensor module of the hardware abstraction layer, wherein the attitude parameter is obtained from a sensor of the electronic device via a sensor driver module of the kernel layer.

7. The method according to claim 5 or 6, wherein determining (S306) the attitude key value based on the attitude type comprises:
determining, via the fingerprint module of the hardware abstraction layer, the attitude type based on the attitude parameter; and
determining, via the fingerprint module of the hardware abstraction layer, the attitude key value based on the attitude type.

8. The method according to claim 7, wherein triggering (S308) the preset function comprises:
determining, via an attitude module of an application layer of the operating system of the electronic device, the preset function based on the attitude key value and the preset mapping relationship; and
triggering the preset function via the attitude module of the application layer.

9. The method according to claim 8, wherein obtaining the attitude key value comprises:
sending, via the fingerprint module of the hardware abstraction layer, the attitude key value to the fingerprint driver module of the kernel layer; and
reporting, via the fingerprint driver module of the kernel layer, the attitude key value to the attitude module of the application layer.

10. The method according to any one of the preceding claims , further comprising:
activating (S201, S301) a function for receiving the preset triggering event under a preset condition.

11. The method according to claim 10, wherein activating (S201, S301) the function for receiving the preset triggering event under the preset condition comprises:
via a notification module of a framework layer of an operating system of the electronic device, activating the function for receiving the preset triggering event and notifying a fingerprint module of a hardware abstraction layer of the operating system under the preset condition.

12. The method according to any one of the preceding claims 1, wherein the attitude type comprises at least one of:
the electronic device being parallel to ground and a screen of the electronic device facing downwards;
the electronic device being parallel to the ground and the screen of the electronic device facing upwards; or
the electronic device in a vertical state being perpendicular to the ground and the screen of the electronic device facing towards a user.

13. The method according to any one of claims 1 to 12, wherein the preset function comprises at least one of:
displaying a payment code;
displaying a collection code; or
scanning a QR code.

14. An electronic device, comprising:
a processor; and
a memory storing instructions that, when being executed by the processor, cause the processor to perform the method according to any one of claims 1 to 13.

15. A program product having stored therein instructions that, when executed by one or more processors of an electronic device, causes the electronic device to perform the method according to any one of claims 1 to 13.
